# EUROPÄISCHE PATENTSCHRIFT

(11) **EP 3 995 817 B1**
(45) Veröffentlichungstag und Bekanntmachung des Hinweises auf die Patenterteilung: **14.08.2024**
(21) Anmeldenummer: 21202065.5
(22) Anmeldetag: 12.10.2021
(51) Int. Cl.: G01N 21/72, G01N 21/31, G01N 33/00

(54) **VERFAHREN UND ANORDNUNG ZUM NACHWEIS VON WASSERSTOFF IN EINEM HEIZGERÄT, DAS MIT WASSERSTOFF ODER WASSERSTOFFHALTIGEM BRENNGAS BETREIBBAR IST**
METHOD AND ASSEMBLY FOR DETECTING HYDROGEN IN A HEATER OPERABLE WITH HYDROGEN OR HYDROGEN-CONTAINING FUEL GAS
PROCÉDÉ ET AGENCEMENT DE DÉTECTION DE L'HYDROGÈNE DANS UN APPAREIL DE CHAUFFAGE POUVANT FONCTIONNER AVEC DE L'HYDROGÈNE OU DU GAZ COMBUSTIBLE CONTENANT DE L'HYDROGÈNE

(30) Priorität: 05.11.2020 DE 102020129162
(43) Veröffentlichungstag der Anmeldung: 11.05.2022
(73) Patentinhaber: Vaillant GmbH, 42859 Remscheid (DE)
(72) Erfinder: Wohlfeil, Arnold, 42799 Leichlingen (DE); Hanfland, Sven, 42653 Solingen (DE); Reinert, Andreas, 58455 Witten (DE); Grabe, Jochen, 51688 Wipperfürth (DE); Oerder, Bodo, 42897 Remscheid (DE); Tomczak, Heinz-Jörg, 42327 Wuppertal (DE); Richter, Klaus, 42855 Remscheid (DE); Salg, Frank, 42897 Remscheid (DE); Paul, Michael, 58332 Schwelm (DE)
(74) Vertreter: Popp, Carsten

(56) Entgegenhaltungen:
- EP-A1- 3 663 648
- US-A1- 2011 138 813

## Beschreibung

Die Erfindung betrifft ein Verfahren und eine Anordnung zum Nachweis von Wasserstoff in einem Heizgerät, das mit Wasserstoff und/oder einem wasserstoffhaltigen Brenngas betreibbar ist. Wasserstoff als Brenngas oder als Beimischung zu Brenngasen wird immer wichtiger, und es werden große Anstrengen unternommen, neue oder auch existierende Heizgeräte für einen Betrieb damit zu ertüchtigen. Dabei geht es nicht nur um große Anlagen, sondern auch um Wandgeräte zur Erwärmung von Wasser und generell um Heizgeräte für die Beheizung von Gebäuden und/oder die Bereitstellung von warmem Wasser.

Wasserstoff unterscheidet sich bei seiner Verbrennung in mehreren Punkten von bisher verwendeten Brenngasen, insbesondere ist eine Wasserstofflamme für das menschliche Auge fast unsichtbar, strahlt weniger Wärme ab als mit kohlenstoffhaltigen Brennstoffen erzeugte Flammen, und Wasserstoff benötigt zu seinem Nachweis andere Messsysteme als andere Brennstoffe. Die vorliegende Erfindung ist daher besonders, aber nicht nur geeignet für Heizgeräte, die mit reinem Wasserstoff oder mit Brenngas, das zu mehr als 97% aus Wasserstoff besteht, betrieben werden.

Andererseits ist Wasserstoff das am besten erforschte (weil einfachste) Element, so dass es in der Physik und Chemie umfangreiche Kenntnisse über seine physikalischen und chemischen Eigenschaften gibt. Das optische Spektrum von atomarem Wasserstoff (und auch das von molekularem) ist bis in kleinste Einzelheiten bekannt und erforscht, insbesondere sind die Emissions- und Absorptionslinien von Wasserstoff gut bekannt und Messverfahren dafür z. B. in der Astronomie und in Laboratorien Stand der Technik.

In Heizgeräten werden dagegen bisher im Allgemeinen einfache und robuste Sensoren für Temperatur, Licht- oder Wärme-Strahlung, Druck, Volumenstrom und dergleichen eingesetzt, um die Heizgeräte zu regeln und deren sicheren Betrieb zu gewährleisten. Mit bisher üblicher Sensorik lassen sich jedoch bei Verwendung von Wasserstoff als Brenngas manche Messungen nicht zuverlässig durchführen. Eine wichtige Aufgabe ist das Feststellen des Vorhandenseins einer stabilen Flamme (ein sogenannter Flammenwächter), eine andere die Einstellung eines für eine stabile und umweltschonende Verbrennung geeigneten Verhältnisses von Verbrennungsluft zu Brenngas (Lambda-Wert). Darüber hinaus ist es bei Verwendung von Brenngas mit nicht konstantem Anteil an Wasserstoff aus verschiedenen Gründen wichtig, das Vorhandensein von Wasserstoff und seinen Anteil zu erkennen. Darüber hinaus soll auch kein unverbrannter Wasserstoff im Abgas des Heizgerätes vorhanden sein, weshalb eine empfindliche Detektion von Wasserstoff im Abgas gewünscht wird. Schließlich ist es auch wichtig, bei abgeschaltetem Brenner und/oder vor der Zündung eines mit Wasserstoff betriebenen Brenners festzustellen, ob sich Wasserstoff in Teilen eines Heizgerätes befindet. Dies dient einerseits zur Feststellung von eventuellen Leckagen, andererseits aber auch zur Durchführung eines schnellen, sauberen und sicheren Zündvorganges.

Eine Verwendung von optischen Sensoren unter Benutzung von optischen Filtern ist für eine spezielle Anwendung bei Heizgeräten, die mit wasserstoffhaltigem Brenngas betrieben werden, schon beispielsweise aus der DE 10 2019 101 329 A1 bekannt, allerdings nicht für den generellen Nachweis des Vorhandenseins von Wasserstoff.

Aus EP3663648 A1 ist bekannt anhand von Emissionen von bestimmten Radikalen auf das Mischungsverhältnis von Verbrennungsluft zu Brenngas (Lambda-Wert) zu schließen.

Aufgabe der vorliegenden Erfindung ist, die mit Bezug auf den Stand der Technik geschildeten Probleme wenigstens teilweise zu lösen, und insbesondere die Schaffung eines Verfahrens und einer Anordnung zum Feststellen und/oder quantitativen Bestimmen des Vorhandenseins von (atomarem oder molekularem) Wasserstoff in einem Verbrennungsraum oder einer Abgasanlage eines Heizgerätes, wobei die Anordnung einfach und geeignet für einen Alltagsbetrieb eines Heizgerätes sein soll.

Zur Lösung dieser Aufgabe dienen ein Verfahren und eine Anordnung sowie ein Computerprogrammprodukt gemäß den unabhängigen Ansprüchen. Vorteilhafte Ausgestaltungen und Weiterbildungen der Erfindung sind in den jeweiligen abhängigen Ansprüchen angegeben. Die Beschreibung, insbesondere im Zusammenhang mit der Zeichnung, veranschaulicht die Erfindung und gibt weitere Ausführungsbeispiele an.

Hierzu trägt ein Verfahren zum Beobachten (und dann ggf. Feststellen) des Vorhandenseins von molekularem und/oder atomarem Wasserstoff an mindestens einer vorgebbaren Messstelle eines Heizgerätes bei, wobei das Heizgerät einen mit Wasserstoff oder einem Wasserstoff enthaltenden Brenngas betriebenen Brenner aufweist und nach dem Zünden des Brenners und/oder bei ausgeschaltetem Brenner mindestens eine optische Emissions- und/oder Absorptionslinie einer bekannten Wellenlänge des atomaren und/oder molekularen Wasserstoffs beobachtet und von ihrer Intensität auf das Vorhandensein von Wasserstoff geschlossen wird.

Für solche Beobachtungen kommen verschiedene Messprinzipien in Betracht. Im einfachsten Fall wird dafür ein optischer Sensor verwendet, dem ein Filter vorgeschaltet ist, der nur einen bestimmten (schmalen) Wellenlängenbereich durchlässt, in dem die Wellenlänge der zu beobachtenden Linie mit einem umgebenden Toleranzbereich von beispielsweise 10 bis 50 nm [Nanometer] Bandbreite liegt. Auf diese Weise kann eine hohe Selektivität gegenüber Störeinflüssen erreicht werden. Falls ein solches Messsystem den Maximal-Temperaturen in einem Heizgerät, insbesondere einem Verbrennungsraum, nicht standhält, kann es in einen kälteren Bereich verlegt werden, entweder hinter ein Fenster mit geeigneter Hitzebeständigkeit und passenden optischen Eigenschaften oder z. B. mittels eines hitzebeständigen Lichtleiters (Glasfaser und dergleichen).

Mit dem Verfahren kann bevorzugt nach einem Zünden des Brenners mindestens eine Emissionslinie beobachtet werden. Durch die Hitze einer Verbrennung werden in dem Verbrennungsraum viele Atome und Moleküle angeregt, so dass sie optische Strahlung mit bestimmten Wellenlängen abstrahlen. Ist in einem Brenngas Wasserstoff vorhanden, so werden auch die Wasserstoffatome (einzeln oder als Moleküle) angeregt, so dass sie Licht mit bestimmten Wellenlängen abstrahlen. Diese bevorzugt abgestrahlten Wellenlängen machen sich bei einer spektralen Aufspaltung des Lichtes als sogenannte Linien bemerkbar. Atomarer und molekularer (zwei verbundene Wasserstoffatome) Wasserstoff haben sehr charakteristische Linien, insbesondere beide eine im Bereich von 655 nm. Durch eine zumindest zeitweise durchgeführte bzw. kontinuierliche Beobachtung mindestens einer dieser Emissionslinien kann auf das Vorhandensein von Wasserstoff im Verbrennungsraum geschlossen werden. Eine weitergehende Auswertung der Intensität und anderer Eigenschaften einer Linie ist möglich, so dass eine Aussage z. B. über die Menge an Wasserstoff oder die Temperatur der Verbrennung (macht sich auch in der Breite einer Linie bemerkbar) getroffen werden kann. Wenn gerade keine Verbrennung stattfindet, werden kaum Atome zu Emissionen angeregt, was aber durch andere Verfahren zur Anregung ausgeglichen werden kann. Z. B. durch eine Lichtquelle mit intensiver Strahlung geeigneter Wellenlänge können Atome zu Emissionen angeregt werden, die dann wieder beobachtet werden können. Allerdings ist immer die Trennung der (primären) Strahlung der Lichtquelle oder der Flamme des Brenners von den (sekundären) Emissionslinien schwierig, weshalb der Sensor in solchen Fällen nicht direkt von Strahlung der Lichtquelle oder der Flamme getroffen werden sollte.

Besonders bevorzugt ist eine Weiterbildung des Verfahrens, bei der bei ausgeschaltetem Brenner und/oder vor dessen Zünden mindestens eine Absorptionslinie beobachtet wird. Im Gegensatz zu einer Emissionslinie entsteht eine Absorptionslinie dadurch, dass Atome (oder Moleküle) von Licht z. B. aus einer Lichtquelle angeregt werden und dabei Licht einer bestimmten Wellenlänge absorbieren (und erst später wieder in irgendeine Richtung abstrahlen), wodurch die absorbierte Wellenlänge (zumindest teilweise) im optischen Spektrum der Lichtquelle fehlt, was als (dunkle) Absorptionslinie bezeichnet wird, die wie eine Emissionslinie beobachtet werden kann. Wenn die Temperatur im Verbrennungsraum niedrig ist, weil keine Verbrennung stattfindet, so gibt es auch fast keine Emissionslinien, die beobachtet werden könnten. Mittels einer geeigneten Lichtquelle kann jedoch Licht durch einen Volumenbereich (z. B. ein Teilvolumen des Verbrennungsraumes) des Heizgerätes auf den Sensor geschickt werden, der die Intensität des Lichtes beobachtet. Befindet sich in dem Volumenbereich Wasserstoff, so macht sich dies durch eine Verringerung der Intensität des Lichtes im beobachteten Wellenlängenbereich bemerkbar, weil ein Teil des Lichtes von Wasserstoff absorbiert wird. Dies kann besonders gut einer Leckage-Überwachung dienen. Sollte Wasserstoff durch Undichtigkeiten (z. B. in einem Brenngasventil) in den Verbrennungsraum strömen, so stellt der Sensor dies fest. Da eine Kalibrierung des Messsystems, z. B. durch Spülen des Verbrennungsraumes mit Luft, möglich ist, können schon geringe Mengen an danach eindringendem Wasserstoff als Verringerung der Lichtintensität in dem beobachteten Wellenlängenbereich festgestellt werden, so dass Leckagen sicher detektiert werden können. Auch bei einem Zündvorgang kann das Messsystem hilfreich sein. Da man zu frühe und/oder zu späte Zündungen aus guten Gründen vermeiden möchte, sollen Zündfunken genau ab dann ausgelöst werden, wenn Wasserstoff (als Beimischung von zuvor von einem Gebläse geförderter Verbrennungsluft) den Verbrennungsraum erreicht. Das kann das Messsystem ebenfalls leisten, wenn es entsprechend mit einer Zündanordnung gekoppelt wird.

Bevorzugt wird mit einem wellenlängensensitiven Sensor Licht aus einem vorgebbaren Volumenbereich des Heizgerätes empfangen und die Intensität der beobachteten Linie gemessen. Der Volumenbereich kann ein Teilbereich des Verbrennungsraumes sein oder ein Teilbereich in einer Abgasanlage des Heizgerätes. Es ist zur Verringerung von störenden Einflüssen bevorzugt, dass der Sensor nur einen kleinen Raumwinkelbereich (Sektor), beispielsweise einen im Wesentlichen kegelförmigen Bereich von 5 bis 15° um eine Kegelachse, beobachtet.

Wenn der Sensor auch Absorptionslinien beobachten soll, wird bevorzugt Licht der Wellenlänge der mindestens einen beobachteten Linie an einer vorgebbaren Messstelle durch den Volumenbereich des Heizgerätes zu dem wellenlängensensitiven Sensor geschickt. Das bedeutet, dass eine Lichtquelle im vom Sensor beobachteten Sektor angeordnet sein muss, deren Licht auf dem Weg zum Sensor den beobachteten Volumenbereich durchläuft und dort von vorhandenem Wasserstoff teilweise absorbiert wird.

Ein weiterer Aspekt betrifft auch eine Anordnung zum Beobachten (und dann ggf. Feststellen) des Vorhandenseins von molekularem und/oder atomarem Wasserstoff an mindestens einer vorgebbaren Messstelle eines Heizgerätes, das einen mit Wasserstoff oder einem Wasserstoff enthaltenden Brenngas betriebenen Brenner aufweist, wobei ein wellenlängensensitiver Sensor für mindestens eine Wellenlänge einer Emissions- und/oder Absorptionslinie des atomaren und/oder molekularen Wasserstoffs vorhanden ist, der eingerichtet ist, nach dem Zünden des Brenners und/oder bei ausgeschaltetem Brenner die Intensität der einfallenden Strahlung dieser Wellenlänge und/oder deren Veränderung zu messen.

Dabei ist es unerheblich, ob die Selektivität des Sensors durch diesen selbst oder ein darin oder davor angeordnetes Filter bewirkt wird. Der Stand der Technik kennt Filter für alle in Frage kommenden Wellenlängenbereiche von Ultraviolett bis Infrarot. Da Wasserstoff Emissions- und Absorptionslinien in verschiedenen Wellenlängenbereichen hat, kann ein für Heizgeräte besonders geeigneter und wenigen Störeinflüssen ausgesetzter Wellenlängenbereich ausgewählt werden.

Für Absorptionsmessungen ist bevorzugt eine Lichtquelle vorhanden, die eingerichtet ist, zumindest Licht der Wellenlänge der mindestens einen gemessenen Linie an einer vorgebbaren Messstelle durch einen Volumenbereich des Heizgerätes zu dem Sensor zu schicken.

In einer speziellen Ausführungsform ist im Strahlengang vor dem Sensor ein optisches Filter vorhanden, welcher nur einen vorgebbaren Wellenlängenbereich durchlässt. Dieses Filter kann auch gleichzeitig als Fenster zum Verbrennungsraum des Heizgerätes ausgebildet oder in ein solches integriert sein, wenn der Sensor außerhalb des Verbrennungsraumes angeordnet sein soll. Außer einem Filter ist alternativ auch die Verwendung eines Prismas oder optischen Gitters zur spektralen Auflösung des Lichtes möglich, wobei dann der Sensor an geeigneter Stelle hinter dem Prisma oder Gitter angeordnet wird.

Besonders bevorzugt arbeitet die Anordnung in einem Wellenlängenbereich von 640 bis 670 nm, insbesondere im Wesentlichen bei 650 bis 660 nm. In diesem Bereich liegt jeweils eine intensive Linie des atomaren und des molekularen Wasserstoffs.

Die Anordnung kann zur Überwachung eines Volumenbereichs in und/oder an einem Verbrennungsraum und/oder in und/oder an einer Abgasanlage des Heizgerätes eingesetzt werden. In der Abgasanlage kann sie neben der Feststellung einer Wasserstoff-Leckage bei ausgeschaltetem Brenner eine zusätzliche Funktion bei laufender Verbrennung übernehmen, nämlich die Feststellung, ob hinter dem Verbrennungsraum noch unverbrannter Wasserstoff vorhanden ist, was nicht der Fall sein soll. Wird eine Emissions- oder Absorptionslinie von Wasserstoff in der Abgasanlage festgestellt, so liegt möglicherweise eine unterstöchiometrische Verbrennung vor, was verhindert werden soll. Hier kann die Anordnung in eine Überwachung, Regelung oder ein Sicherheitskonzept einbezogen werden.

Ein weiterer Aspekt betrifft auch ein Computerprogramprodukt umfassend Befehle, die bewirken, dass die beschriebene Anordnung das beschriebene Verfahren ausführt. Die Auswertung der vom Sensor gemessenen Daten und deren weitere Verwendung im Heizgerät benötigen ein Programm und Daten für die Steuerung des Heizgerätes, wobei beides gelegentlich aktualisiert werden muss.

Die Erläuterungen zum Verfahren können zur näheren Charakterisierung der Anordnung herangezogen werden, und umgekehrt. Die Anordnung kann auch so eingerichtet sein, dass damit das Verfahren durchgeführt wird.

Ein schematisches Ausführungsbeispiel der Erfindung, auf das diese jedoch nicht beschränkt ist, und die Funktionsweise des Verfahrens werden nun anhand der Zeichnung näher erläutert. Es stellt dar:

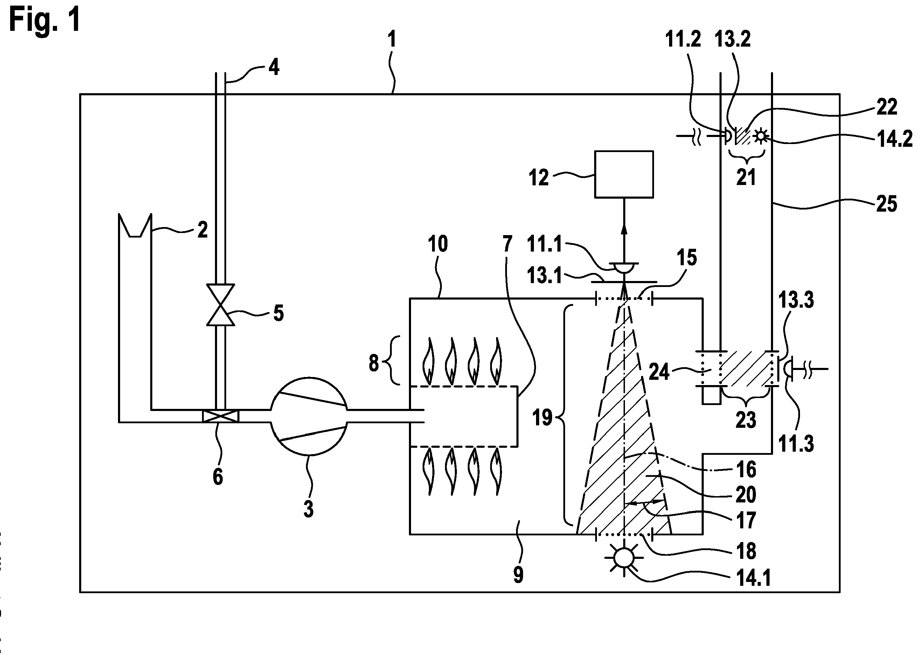

- Fig. 1:: ein Heizgerät mit angeordneten Messsystemen für Wasserstoff.

Fig. 1 zeigt schematisch ein Heizgerät 1, welches mit Wasserstoff oder einem wasserstoffhaltigen Brenngas betreibbar ist. Über eine Luftzufuhr 2 wird Luft (meist Außenluft / Umgebungsluft) von einem Gebläse 3 angesaugt und zu einem Brenner 7 gefördert. Über eine Brenngaszufuhr 4 und ein Brenngasventil 5 wird dem vom Gebläse 3 erzeugten Luftstrom Brenngas in einem Mischer 6 (z. B. einer Venturidüse) beigemischt. Das Gemisch wird in einem Verbrennungsraum 9, der von einem Gehäuse 10 umgeben ist, verbrannt, wobei ein Flammenbereich 8 entsteht. Ein erster optischer Sensor 11.1 ist zur Messung an einer ersten Messstelle 19 so angeordnet, dass er einen ersten Volumenbereich 20 im Verbrennungsraum 9 beobachten kann. Bevorzugt weist der erste Sensor 11.1 eine optische Achse 16 auf und beobachtet einen kegelförmigen Winkelbereich 17 von z. B. 5 - 15° [Winkelgrad], vorzugsweise 7 bis 13°. Auch eine noch stärkere Kollimierung ist möglich. Günstig für Messungen während eines Betriebes des Brenners 7 ist es, wenn der erste Volumenbereich 20 außerhalb des Flammenbereiches 8 liegt, wodurch Störeinflüsse reduziert werden können. Der erste Sensor 11.1 ist entweder selbst wellenlängensensitiv (empfindlich nur für einen bestimmten Wellenlängenbereich) ausgelegt oder es ist ihm ein erstes optisches Filter 13.1 vorgeschaltet, welches nur einen bestimmten Wellenlängenbereich durchlässt, in dem die zu beobachtende(n) Linie(n) liegt bzw. liegen. Dieser Wellenlängenbereich kann je nach Anwendungsfall im Infrarotbereich, im Bereich des sichtbaren Lichtes oder im Ultraviolettbereich liegen, wo Wasserstoff jeweils Linien erzeugt. Im Allgemeinen kann ein solcher erster Sensor 11.1 schon wegen seiner Zuleitungen und seiner Temperaturempfindlichkeit nicht innerhalb eines Verbrennungsraumes 9 angeordnet werden, weshalb er bevorzugt hinter einem im Gehäuse 10 angeordneten ersten Fenster 15 liegt. Das erste Filter 13.1 kann innen am Fenster 15, außen oder bevorzugt integriert mit dem Fenster 15 angeordnet sein. Eine Auswerteelektronik 12, mit der der erste Sensor 11.1 verbunden ist, wertet die Messignale des ersten Sensors 11.1 aus und schließt daraus auf das Vorhandensein von Wasserstoff und ermittelt gegebenenfalls auch quantitativ dessen Konzentration im ersten Volumenbereich 20. Es sei erwähnt, dass räumlich andere Anordnungen möglich sind, insbesondere, wenn Lichtwellenleiter zu einer Weiterleitung von Licht an eine gewünschte Stelle eingesetzt werden. Die bisher beschriebene Anordnung kann Emissionslinien des Wasserstoffs messen, die durch die bei der Verbrennung entstehende Anregung von Wasserstoff entstehen und im ersten Volumenbereich 20 abgestrahlt werden. Aus deren Intensität können Schlüsse z. B. auf die Zusammensetzung des Brennstoffes, die Qualität der Verbrennung, die Leistung des Brenners und dergleichen gezogen werden. Auch ein Einsatz als Flammenwächter und/oder zur Regelung der Verbrennung ist möglich.

Eine weitere Bedeutung bekommt die beschriebene Anordnung durch die Möglichkeit, sie auch bei ausgeschaltetem Brenner 7 und/oder während eines Zündvorganges zu benutzen. Dazu wird die Anordnung um eine erste Lichtquelle 14.1 ergänzt, die bevorzugt auch außerhalb des Gehäuses 10 hinter einem zweiten Fenster 18 angeordnet ist. Von dieser ersten Lichtquelle 14.1 abgestrahltes Licht (jedenfalls im beobachteten Wellenlängenbereich) erreicht den ersten Sensor 11.1 durch den ersten Volumenbereich 20. Irgendwo im Strahlengang ist das erste optische Filter 13.1 anzuordnen, um eine genügende Empfindlichkeit der Messung zu erreichen. Wenn kein Wasserstoff in dem Volumenbereich 20 vorhanden ist, was z. B. zuverlässig durch Spülen (Einschalten des Gebläses 3 ohne Wasserstoffzufuhr) erreicht werden kann, wird vom ersten Sensor 11.1 eine bestimmte Intensität gemessen. Gelangt Wasserstoff, z. B. auf Grund einer Leckage in den Volumenbereich 20, so wird dieser von dem Licht teilweise angeregt, was sich in dem beobachteten Wellenlängenbereich durch eine Verringerung der gemessenen Intensität bemerkbar macht (eine Absorptionslinie tritt auf). So kann beispielsweise eine Leckage-Warnung ausgegeben werden. Diese Art der Messung kann auch vor und/oder bei einem Zündvorgang eingesetzt werden, erstens um zu prüfen, ob eine Spülung zur Reinigung des Verbrennungsraumes 9 von Wasserstoffresten vor dem Zündvorgang erforderlich ist, und zweitens, um Festzustellen, wann genau Wasserstoff den ersten Volumenbereich erreicht, wodurch ein geeigneter und sicherer Zündzeitpunkt sehr exakt festgelegt werden kann. Hierzu ist die Auswerteelektronik 12 mit der Steuerung und Regelung (nicht dargestellt) des Heizgerätes 1 verbunden oder in diese integriert.

Die beschriebene Messung von mindestens einer Absorptionslinie des (atomaren oder molekularen) Wasserstoffs kann auch benutzt werden, um an weiteren Messstellen 21, 23, insbesondere in einer Abgasanlage 25 eines Heizgerätes 1 durchzuführen. Auch dies kann bei ausgeschaltetem Brenner 7 zur Feststellung von Leckagen dienen, ist aber besonders geeignet, um während des Betriebes des Brenners 7 festzustellen, ob unverbrannter Wasserstoff im Abgas enthalten ist. Dazu ist ein beschriebenes Messsystem mit zweiter Lichtquelle 14.2, zweitem Filter 13.2 und zweitem Sensor 11.2 an einer zweiten Messstelle 21 in der Abgasanlage 25 vorhanden und beobachtet einen zweiten Volumenbereich 22. Da es dort wesentlich weniger heiß als im Verbrennungsraum 9 ist, kann dort ohne Fenster gearbeitet werden, wenn dies sinnvoll erscheint. Ansonsten ist die Messanordnung aber prinzipiell gleich wie schon beschrieben aufgebaut.

Eine besondere Möglichkeit, ohne zusätzliche Lichtquelle auszukommen, ergibt sich aber, wenn die Abgasanlage 25 so verläuft, dass ein optischer Durchlass 24 zwischen Verbrennungsraum 9 und Abgasanlage 25 an einer dritten Messstelle 23 geschaffen werden kann. Insbesondere soll dabei Licht vom Flammenbereich 8 auf Abgas in der Abgasanlage 25 fallen und auf einen dahinter angeordneten dritten Sensor 11.3 mit drittem Filter 13.3 treffen. Das Licht des Flammenbereiches 8 enthält besonders intensiv gerade die Wellenlängen, die dann von eventuell im Abgas noch vorhandenem Wasserstoff absorbiert werden, was vom dritten Sensor 11.3 festgestellt wird.

Die vorliegende Erfindung erlaubt es, mit einer einfachen und robusten Instrumentierung an einem Heizgerät das Vorhandensein von Wasserstoff auf Grund von Leckagen und/oder unvollständiger Verbrennung nachzuweisen und/oder einen günstigen Zeitpunkt für die Zündung des Brenners zu ermitteln.

### Bezugszeichenliste

- 1: Heizgerät
- 2: Luftzufuhr
- 3: Gebläse
- 4: Brenngaszufuhr
- 5: Brenngasventil
- 6: Mischer
- 7: Brenner
- 8: Flammenbereich
- 9: Verbrennungsraum
- 10: Gehäuse (des Verbrennungsraumes)
- 11: Sensor erster, zweiter, dritter (11.1, 11.2, 11.3)
- 12: Auswerteelektronik
- 13: Optisches Filter erstes, zweites, drittes (13.1, 13.2, 13.3)
- 14: Lichtquelle erste, zweite (14.1, 14.2)
- 15: Erstes Fenster
- 16: Optische Achse
- 17: Winkelbereich
- 18: Zweites Fenster
- 19: Erste Messstelle
- 20: Erster Volumenbereich
- 21: Zweite Messstelle
- 22: Zweiter Volumenbereich
- 23: Dritte Messstelle
- 24: Optischer Durchlass
- 25: Abgasanlage

## Patentansprüche

1. Verfahren zum Beobachten des Vorhandenseins von molekularem und/oder atomarem Wasserstoff an mindestens einer vorgebbaren Messstelle (19; 21; 23) eines Heizgerätes (1), das einen mit Wasserstoff oder einem Wasserstoff enthaltenden Brenngas betriebenen Brenner (7) aufweist, **dadurch gekennzeichnet, dass**
(a) nach dem Zünden des Brenners (7) mindestens eine optische Emissionslinie einer bekannten Wellenlänge des atomaren Wasserstoffs (H) und/oder molekularen Wasserstoffs (H₂) und/oder
(b) bei ausgeschaltetem Brenner (7) eine Absorptionslinie einer bekannten Wellenlänge des atomaren Wasserstoffs (H) und/oder molekularen Wasserstoffs (H₂) beobachtet und von ihrer Intensität auf das Vorhandensein von Wasserstoff geschlossen wird.

2. Verfahren nach Anspruch 1, wobei aus der Breite der Emissionslinie auf die Temperatur der Verbrennung geschlossen wird.

3. Verfahren nach Anspruch 1 oder 2, wobei bei ausgeschaltetem Brenner (7) und/oder vor dessen Zünden mindestens eine Absorptionslinie beobachtet wird, und erst ein Zündfunke ausgelöst wird, wenn auf das Vorhandensein von Wasserstoff geschlossen wurde.

4. Verfahren nach einem der Ansprüche 1 bis 3, wobei mit einem wellenlängensensitiven Sensor (11.1, 13.1; 11.2, 13.2; 11.3, 13.3) Licht aus einem vorgebbaren Volumenbereich (20; 22) des Heizgerätes (1) empfangen und die Intensität der beobachteten Linie gemessen wird, wobei dieser einen kleinen Raumwinkelbereich (Sektor), nämlich einen kegelförmigen Bereich von 5 bis 15° um eine Kegelachse, beobachtet.

5. Verfahren nach Anspruch 4, wobei Licht der Wellenlänge der mindestens einen beobachteten Linie an einer vorgebbaren Messstelle (19; 21; 23) durch den Volumenbereich (20; 22) des Heizgerätes (1) zu dem wellenlängensensitiven Sensor (11.1, 13.1; 11.2, 13.2; 11.3, 13.3) geschicktwird, wobei die Lichtquelle im vom Sensor (11.1, 13.1; 11.2, 13.2; 11.3, 13.3) beobachteten Sektor angeordnet ist.

6. Anordnung zum Beobachten des Vorhandenseins von molekularem und/oder atomarem Wasserstoff an mindestens einer vorgebbaren Messstelle (19; 21; 23) eines Heizgerätes (1), das einen mit Wasserstoff oder einem Wasserstoff enthaltenden Brenngas betriebenen Brenner (7) aufweist, **dadurch gekennzeichnet, dass** ein wellenlängensensitiver Sensor (11.1, 13.1; 11.2, 13.2; 11.3, 13.3)
(a) für mindestens eine Wellenlänge einer Emissionslinie des atomaren Wasserstoffs (H) und/oder molekularen Wasserstoffs (H₂) und/oder
(b) für mindestens eine Wellenlänge einer Absorptionslinie des atomaren Wasserstoffs (H) und/oder molekularen Wasserstoffs (H₂) vorhanden ist, der eingerichtet ist, die Intensität der einfallenden Strahlung dieser Wellenlänge und/oder deren Veränderung zu messen, dass weiter eine Auswerteelektronik vorhanden ist, die mit dem wellenlängensensitiven Sensor verbunden ist und die geeignet ist die Messung für das Vorhandenseins von molekularem und/oder atomarem Wasserstoff an mindestens einer vorgebbaren Messstelle (19; 21; 23) heranzuziehen.

7. Anordnung nach Anspruch 6, wobei mindestens eine Lichtquelle (14) vorhanden ist, die eingerichtet ist, zumindest Licht der Wellenlänge der mindestens einen gemessenen Linie an einer vorgebbaren Messstelle (19, 21, 23) durch einen Volumenbereich (20; 22) des Heizgerätes (1) zu dem Sensor (11.1, 13.1; 11.2, 13.2) zu schicken.

8. Anordnung nach Anspruch 6 oder 7, wobei im Strahlengang vor dem Sensor (11.1; 11.2; 11.3) ein optisches Filter (13.1; 13.2; 13.3) vorhanden ist, welches nur einen vorgebbaren Wellenlängenbereich durchlässt.

9. Anordnung nach einem der Ansprüche 6 bis 8, wobei die Anordnung eingerichtet ist, in einem Wellenlängenbereich von 640 bis 670 nm zu messen.

10. Anordnung nach einem der Ansprüche 6 bis 9, wobei die Anordnung zur Überwachung eines Volumenbereichs (20; 22) in und/oder an einem Verbrennungsraum (9) und/oder in und/oder an einer Abgasanlage (25) des Heizgerätes (1) angeordnet ist.

11. Anordnung nach einem der Ansprüche 6 bis 9, wobei diese zur Durchführung eines Verfahrens nach einem der Ansprüche 1 bis 5 eingerichtet ist.

12. Computerprogramprodukt umfassend Befehle, die bewirken, dass die Anordnung nach einem der Ansprüche 6 bis 10 das Verfahren nach einem der Ansprüche 1 bis 5 ausführt.

## Claims

1. Method for observing the presence of molecular and/or atomic hydrogen at at least one predeterminable measuring point (19; 21; 23) of a heating appliance (1), which has a burner (7) operated with hydrogen or a hydrogen-containing fuel gas, **characterised in that**
(a) after igniting the burner (7) at least one optical emission line of a known wavelength of the atomic hydrogen (H) and/or molecular hydrogen (H2) and/or
(b) when the burner (7) is switched off an absorption line of a known wavelength of the atomic hydrogen (H) and/or molecular hydrogen (H₂) is observed and the presence of hydrogen is deduced from its intensity.

2. Method according to claim 1, wherein the temperature of the combustion is deduced from the width of the emission line.

3. Method according to claim 1 or 2, wherein when the burner (7) is switched off and/or before it is ignited at least one absorption line is observed, and an ignition spark is only triggered when the presence of hydrogen has been deduced.

4. Method according to any one of claims 1 to 3, wherein light from a predeterminable volume region (20; 22) of the heating appliance (1) is received by a wavelength-sensitive sensor (11.1, 13.1; 11.2, 13.2; 11.3, 13.3) and the intensity of the observed line is measured, wherein the latter observes a small solid angle (sector), namely a conical region of 5 to 15° about a cone axis.

5. Method according to claim 4, wherein light of the wavelength of the at least one observed line is sent at a predeterminable measuring point (19; 21; 23) through the volume region (20; 22) of the heating appliance (1) to the wavelength-sensitive sensor (11.1, 13.1; 11.2, 13.2; 11.3, 13.3), wherein the light source is arranged in the sector observed by the sensor (11.1, 13.1; 11.2, 13.2; 11.3, 13.3).

6. Assembly for observing the presence of molecular and/or atomic hydrogen at at least one predeterminable measuring point (19; 21; 23) of a heating appliance (1), which has a burner (7) operated with hydrogen or a hydrogen-containing fuel gas, **characterised in that** a wavelength-sensitive sensor (11.1, 13.1; 11.2, 13.2; 11.3, 13.3) is provided,
(a) for at least one wavelength of an emission line of the atomic hydrogen (H) and/or molecular hydrogen (H₂)
and/or
(b) for at least one wavelength of an absorption line of the atomic hydrogen (H) and/or molecular hydrogen (H₂), which is configured to measure the intensity of the incidental radiation of this wavelength and/or its change, **in that** evaluation electronics are also provided which are connected to the wavelength-sensitive sensor and which are suitable for using the measurement for the presence of molecular and/or atomic hydrogen at at least one predeterminable measuring point (19; 21; 23).

7. Assembly according to claim 6, wherein at least one light source (14) is provided, which is configured to send at least light of the wavelength of the at least one measured line at a predeterminable measuring point (19, 21, 23) through a volume region (20; 22) of the heating appliance (1) to the sensor (11.1, 13.1; 11.2, 13.2).

8. Assembly according to claim 6 or 7, wherein an optical filter (13.1; 13.2; 13.3) is provided in the beam path before the sensor (11.1; 11.2; 11.3), which filter only transmits a predeterminable wavelength range.

9. Assembly according to any one of claims 6 to 8, wherein the assembly is configured to measure in a wavelength range of 640 to 670 nm.

10. Assembly according to any one of claims 6 to 9, wherein the assembly is arranged for monitoring a volume region (20; 22) in and/or at a combustion chamber (9) and/or in and/or at an exhaust system (25) of the heating appliance (1).

11. Assembly according to any one of claims 6 to 9, wherein the latter is configured to perform a method according to any one of claims 1 to 5.

12. Computer program product comprising commands that cause the assembly according to any one of claims 6 to 10 to perform the method according to any one of claims 1 to 5.

## Revendications

1. Procédé d'observation de la présence d'hydrogène moléculaire et/ou atomique à au moins un point de mesure (19 ; 21 ; 23) prédéterminable d'un appareil de chauffage (1) qui présente un brûleur (7) fonctionnant avec de l'hydrogène ou un gaz combustible contenant de l'hydrogène, **caractérisé en ce que**
(a) après l'allumage du brûleur (7), au moins une ligne d'émission optique d'une longueur d'onde connue de l'hydrogène atomique (H) et/ou de l'hydrogène moléculaire (H2) et/ou
(b) lorsque le brûleur (7) est éteint, une ligne d'absorption d'une longueur d'onde connue de l'hydrogène atomique (H) et/ou de l'hydrogène moléculaire (H₂) est observée et la présence d'hydrogène est déduite de son intensité.

2. Procédé selon la revendication 1, dans lequel la température de la combustion est déduite de la largeur de la ligne d'émission.

3. Procédé selon la revendication 1 ou 2, dans lequel au moins une ligne d'absorption est observée lorsque le brûleur (7) est éteint et/ou avant son allumage, et une étincelle d'allumage n'est déclenchée que lorsque la présence d'hydrogène a été déduite.

4. Procédé selon l'une quelconque des revendications 1 à 3, dans lequel de la lumière est reçue à partir d'une zone de volume (20 ; 22) prédéterminable de l'appareil de chauffage (1) avec un capteur (11.1, 13.1; 11.2, 13.2 ; 11.3, 13.3) sensible aux longueurs d'onde et l'intensité de la ligne observée est mesurée, dans lequel celui-ci observe une petite zone angulaire spatiale (secteur), à savoir une zone conique de 5 à 15° autour d'un axe de cône.

5. Procédé selon la revendication 4, dans lequel de la lumière de la longueur d'onde de l'au moins une ligne observée est envoyée à un point de mesure (19 ; 21 ; 23) prédéterminable à travers la zone de volume (20 ; 22) de l'appareil de chauffage (1) vers le capteur (11.1, 13.1 ; 11.2, 13.2 ; 11.3, 13.3) sensible aux longueurs d'onde, dans lequel la source de lumière est disposée dans le secteur observé par le capteur (11.1, 13.1 ; 11.2, 13.2; 11.3, 13.3).

6. Agencement d'observation de la présence d'hydrogène moléculaire et/ou atomique à au moins un point de mesure (19 ; 21; 23) prédéterminable d'un appareil de chauffage (1), qui présente un brûleur (7) fonctionnant avec de l'hydrogène ou un gaz combustible contenant de l'hydrogène, **caractérisé en ce qu'**un capteur (11.1, 13.1 ; 11.2, 13.2 ; 11.3, 13.3) sensible aux longueurs d'onde est présent
(a) pour au moins une longueur d'onde d'une ligne d'émission de l'hydrogène atomique (H) et/ou de l'hydrogène moléculaire (H₂)
et/ou
(b) pour au moins une longueur d'onde d'une ligne d'absorption de l'hydrogène atomique (H) et/ou de l'hydrogène moléculaire (H₂), qui est configuré pour mesurer l'intensité du rayonnement incident de cette longueur d'onde et/ou sa variation, **en ce qu'**une électronique d'évaluation qui est connectée au capteur sensible aux longueurs d'onde et qui est adaptée pour utiliser la mesure de la présence d'hydrogène moléculaire et/ou atomique à au moins un point de mesure (19 ; 21 ; 23) prédéterminable est en outre présente.

7. Agencement selon la revendication 6, dans lequel est présente au moins une source de lumière (14) qui est configurée pour envoyer au moins de la lumière de la longueur d'onde de l'au moins une ligne mesurée à un point de mesure (19, 21, 23) prédéterminable à travers une zone de volume (20 ; 22) de l'appareil de chauffage (1) vers le capteur (11.1, 13.1 ; 11.2, 13.2).

8. Agencement selon la revendication 6 ou 7, dans lequel un filtre optique (13.1 ; 13.2 ; 13.3) est présent dans le trajet de faisceau avant le capteur (11.1 ; 11.2 ; 11.3), filtre qui ne laisse passer qu'une gamme de longueurs d'onde prédéterminable.

9. Agencement selon l'une quelconque des revendications 6 à 8, dans lequel l'agencement est configuré pour mesurer dans une gamme de longueurs d'onde de 640 à 670 nm.

10. Agencement selon l'une quelconque des revendications 6 à 9, dans lequel l'agencement est configuré pour surveiller une zone de volume (20 ; 22) dans et/ou au niveau d'une chambre de combustion (9) et/ou dans et/ou au niveau d'un système d'échappement (25) de l'appareil de chauffage (1).

11. Agencement selon l'une quelconque des revendications 6 à 9, dans lequel celui-ci est configuré pour mettre en oeuvre un procédé selon l'une quelconque des revendications 1 à 5.

12. Produit de programme informatique comprenant des instructions qui ont pour effet que l'agencement selon l'une quelconque des revendications 6 à 10 réalise le procédé selon l'une quelconque des revendications 1 à 5.
